# FASCICULE DE BREVET EUROPEEN

(11) **EP 3 142 772 B1**
(45) Date de publication et mention de la délivrance du brevet: **11.04.2018**
(21) Numéro de dépôt: 15724966.5
(22) Date de dépôt: 12.05.2015
(51) Int. Cl.: B01D 53/14

(54) **SOLUTION ABSORBANTE A BASE DE DIAMINES TERTIAIRES BETA HYDROXYLEES ET PROCEDE D'ÉLIMINATION DE COMPOSES ACIDES D'UN EFFLUENT GAZEUX**
ABSORBIERENDE LÖSUNG AUF BASIS VON BETA-HYDROXYLIERTEN TERTIÄREN DIAMINEN UND VERFAHREN ZUR ENTFERNUNG VON SÄUREVERBINDUNGEN AUS EINEM GASFÖRMIGEN ABSTROM
ABSORBENT SOLUTION BASED ON BETA-HYDROXYLATED TERTIARY DIAMINES AND PROCESS FOR ELIMINATING ACID COMPOUNDS FROM A GASEOUS EFFLUENT

(30) Priorité: 16.05.2014 FR 1454372
(43) Date de publication de la demande: 22.03.2017
(73) Titulaire: IFP Energies nouvelles, 92500 Rueil-Malmaison (FR)
(72) Inventeur: DELFORT, Bruno, F-75005 Paris (FR); LE PENNEC, Dominique, F-78910 Orgerus (FR); GRANDJEAN, Julien, F-69008 Lyon (FR); HUARD, Thierry, F-69360 Saint Symphorien D'ozon (FR); WENDER, Aurélie, F-92500 Rueil-malmaison (FR); NIGON, Armelle, F-92500 Rueil-Malmaison (FR)
(86) Numéro de dépôt international: PCT/EP2015/060517
(87) Numéro de publication internationale: WO 2015/173263

(56) Documents cités:
- EP-A1- 2 429 686
- WO-A1-2011/082811
- DE-A1-102010 027 513
- FR-A1- 2 961 114

## Description

### Domaine de l'invention

La présente invention concerne le domaine des procédés de désacidification d'un effluent gazeux. L'invention s'applique avantageusement au traitement de gaz d'origine industrielle et du gaz naturel.

### Contexte général

On utilise couramment des procédés de désacidification de gaz mettant en oeuvre des solutions aqueuses d'amines pour retirer les composés acides présents dans un gaz, notamment le dioxyde de carbone (CO₂) l'hydrogène sulfuré (H₂S), l'oxysulfure de carbone (COS), le disulfure de carbone (CS₂), le dioxyde de soufre (SO₂) et les mercaptans (RSH) tel que le méthylmercaptan (CH₃SH), l'éthylmercaptan (CH₃CH₂SH) et le propylmercaptan (CH₃CH₂CH₂SH). Le gaz est désacidifié par mise en contact avec la solution absorbante, puis la solution absorbante est régénérée thermiquement.

Ces procédés de désacidification de gaz acides sont aussi communément appelés "lavage aux solvants" avec un solvant dit "chimique", par opposition à l'utilisation solvant dit "physique" pour l'absorption qui n'est pas basée sur la réalisation de réactions chimiques.

Un solvant chimique correspond à une solution aqueuse comprenant un réactif qui réagit sélectivement avec les composés acides (H₂S, CO₂, COS, CS₂, etc.) présents dans le gaz traité pour former des sels, sans réagir avec les autres composés non acides du gaz. Le gaz traité après mise en contact avec le solvant est alors appauvri en composés acides, lesquels sont sélectivement transférés sous forme de sels dans le solvant. Les réactions chimiques sont réversibles, ce qui permet au solvant chargé en composés acides d'être ensuite désacidifié, par exemple sous l'action de la chaleur, pour libérer d'une part les composés acides sous forme de gaz, qui peuvent alors être stockés, transformés ou être utilisés pour diverses applications, et pour d'autre part régénérer le solvant qui retourne à son état initial et peut ainsi être réutilisé pour une nouvelle phase de réaction avec le gaz acide à traiter. La phase de réaction du solvant avec le gaz acide est communément appelée la phase d'absorption, et celle où le solvant est désacidifié est appelée la phase de régénération du solvant.

En général, les performances de la séparation des composés acides du gaz, dans ce contexte, dépendent principalement de la nature de la réaction réversible choisie. Les procédés conventionnels de désacidification de gaz acides sont généralement des procédés dits "aux amines", c'est à dire qu'ils reposent sur les réactions des composés acides avec des amines en solution. Ces réactions entrent dans le cadre général des réactions acido-basiques. L'H₂S, le CO₂, ou le COS sont par exemple des composés acides, notamment en présence d'eau, alors que les amines sont des composés basiques. Les mécanismes des réactions et la nature des sels obtenus dépendent généralement de la structure des amines mises en oeuvre.

Par exemple le document US 6 852 144 décrit une méthode d'élimination des composés acides des hydrocarbures utilisant une solution absorbante eau-N-méthyldiéthanolamine ou eau-triéthanolamine contenant une forte proportion d'un composé appartenant au groupe suivant : pipérazine et/ou méthylpipérazine et/ou morpholine.

Les performances des procédés de désacidification de gaz acides par lavage aux amines sont directement dépendantes de la nature de la ou des amines présentes dans le solvant. Ces amines peuvent être primaires, secondaires ou tertiaires. Elles peuvent présenter une ou plusieurs fonctions amines équivalentes ou différentes par molécule.

Afin d'améliorer les performances des procédés de désacidification, il est continuellement recherché des amines toujours plus performantes.

Une limitation des solutions absorbantes couramment utilisées dans des applications de désacidification est une sélectivité insuffisante d'absorption de l'H₂S par rapport au CO₂. En effet, dans certains cas de désacidification du gaz naturel, on recherche une élimination sélective de l'H₂S en limitant au maximum l'absorption du CO₂. Cette contrainte est particulièrement importante pour des gaz à traiter contenant déjà une teneur en CO₂ inférieure ou égale à la spécification désirée. On recherche alors une capacité d'absorption de H₂S maximale avec une sélectivité maximale d'absorption de H₂S vis-à-vis du CO₂. Cette sélectivité permet de maximiser la quantité de gaz traité et de récupérer un gaz acide en sortie de régénérateur ayant une concentration la plus élevée possible en H₂S, ce qui limite la taille des unités de la chaîne soufre en aval du traitement et garantit un meilleur fonctionnement. Dans certains cas, une unité d'enrichissement en H₂S est nécessaire pour concentrer en H₂S le gaz acide. Dans ce cas, on recherche également l'amine la plus sélective. Des amines tertiaires, comme la N-méthyldiéthanolamine, ou des amines secondaires encombrées présentant une cinétique de réaction lente avec le CO₂ sont couramment utilisées, mais présentent des sélectivités limitées à des taux de charge en H₂S élevés.

Il est bien connu de l'homme du métier que les amines tertiaires ou les amines secondaires avec un encombrement stérique sévère ont une cinétique de captage du CO₂ plus lente que des amines primaires ou secondaires peu encombrées. En revanche, les amines tertiaires ou secondaires avec un encombrement stérique sévère ont une cinétique de captage de l'H₂S instantanée, ce qui permet de réaliser une élimination sélective de l'H₂S basée sur des performances cinétiques distinctes.

Différents documents proposent d'utiliser des amines tertiaires ou secondaires encombrées, en particulier des diamines tertiaires ou secondaires encombrées, en solution pour désacidifier des gaz acides.

Parmi les applications des amines tertiaires ou secondaires avec un encombrement stérique sévère, le brevet US 4,405,582 décrit un procédé d'absorption sélective de gaz sulfurés par un absorbant contenant un diaminoéther dont au moins une fonction amine est tertiaire et dont l'autre fonction amine est tertiaire ou secondaire possédant un encombrement stérique sévère, l'atome d'azote étant dans ce dernier cas lié soit à au moins un carbone tertiaire, soit à deux atomes de carbone secondaires. Les deux fonctions amines et les carbones de la chaîne principale peuvent être substitués par des radicaux alkyles ou hydroxyalkyles.

Le brevet US 4,405,583 décrit également un procédé d'élimination sélective de l'H₂S dans des gaz contenant de l'H₂S et du CO₂ par un absorbant contenant un diaminoéther dont les deux fonctions amines secondaires présentent un encombrement stérique sévère défini comme précédemment. Les substituants des fonctions amines et des carbones de la chaîne principale peuvent être substitués par des radicaux alkyle et hydroxyalkyle.

Le brevet FR 2934172 décrit la mise en oeuvre d'une solution absorbante à base d'une diamine tertiaire dans un procédé d'élimination de composés acides s'appliquant avantageusement au traitement du gaz naturel et aux fumées de combustion, ladite amine étant la N,N,N',N'-tétraméthyl-1,6-hexanediamine. Enfin, les documents FR 2961114 et DE 10 2010 027513 décrivent respectivement l'utilisation de 1,2-bis(2-diméthylaminoéthoxy)éthane et de 2-(2-diméthylaminoéthoxy)-N,N-diméthyléthanamine, donc de diamines tertiaires comprenant au moins une fonction éther, pour l'absorption de gaz acides.

Une autre limitation des solutions absorbantes couramment utilisées dans des applications de désacidification totale est une cinétique de captage du CO₂ ou du COS trop lente. Dans le cas où les spécifications désirées sur le CO₂ ou en COS sont très poussées, on recherche une cinétique de réaction la plus rapide possible de manière à réduire la hauteur de la colonne d'absorption. Cet équipement sous pression représente en effet une part importante des coûts d'investissements du procédé.

Que l'on recherche une cinétique de captage du CO₂ et du COS maximale dans une application désacidification totale, ou une cinétique de captage du CO₂ minimale dans une application sélective, on désire toujours utiliser une solution absorbante ayant la capacité cyclique la plus grande possible. Cette capacité cyclique, notée Δα correspond à la différence de taux de charge (α désignant le nombre de mole de composés acides absorbés n_{gaz acide} par kilogramme de solution absorbante) entre la solution absorbante soutirée en fond de la colonne d'absorption et la solution absorbante alimentant ladite colonne. En effet, plus la solution absorbante a une forte capacité cyclique, plus le débit de solution absorbante qu'il faut mettre en oeuvre pour désacidifier de gaz à traiter est restreint. Dans les procédés de traitement de gaz, la réduction du débit de solution absorbante a également un fort impact sur la réduction des investissements, notamment au niveau du dimensionnement de la colonne d'absorption.

Un autre aspect primordial des opérations de traitement de gaz ou fumées industrielles par solvant reste la régénération de l'agent de séparation. En fonction du type d'absorption (physique et/ou chimique), on envisage généralement une régénération par détente, et/ou par distillation et/ou par entraînement par un gaz vaporisé appelé "gaz de strippage". La consommation énergétique nécessaire à la régénération du solvant peut être très importante, ce qui est particulièrement vrai dans le cas où la pression partielle de gaz acides est faible, et représenter un coût opératoire considérable pour le procédé de captage du CO₂.

Il est bien connu de l'homme du métier que l'énergie nécessaire à la régénération par distillation d'une solution d'amine peut se décomposer selon trois postes différents l'énergie nécessaire pour réchauffer la solution absorbante entre la tête et le fond du régénérateur, l'énergie nécessaire pour abaisser la pression partielle de gaz acide dans le régénérateur par vaporisation d'un gaz de strippage, et enfin l'enthalpie nécessaire pour casser la liaison chimique entre l'amine et le CO₂.

Ces deux premiers postes sont proportionnels aux débits de solution absorbante qu'il est nécessaire de faire circuler dans l'unité pour réaliser une spécification donnée. Pour diminuer la consommation énergétique associée à la régénération du solvant, il est donc préférable encore une fois de maximiser la capacité cyclique du solvant. En effet, plus la solution absorbante a une forte capacité cyclique, plus le débit de solution absorbante qu'il faut mettre en oeuvre pour désacidifier de gaz à traiter est restreint.

Il existe ainsi un besoin, dans le domaine de la désacidification de gaz, de fournir des composés qui soient de bons candidats pour l'élimination des composés acides d'un effluent gazeux, notamment, mais pas exclusivement, pour l'élimination sélective de l'H₂S par rapport au CO₂, et qui permettent de fonctionner à moindres coûts opératoires (dont l'énergie de régénération) et d'investissements (dont le coût de la colonne d'absorption).

### Description de l'invention

Les inventeurs ont mis en évidence que les diamines tertiaires ou secondaires possédant un encombrement stérique sévère ne sont pas équivalentes en terme de performances pour leur usage dans des formulations de solutions absorbantes pour le traitement de gaz acides dans un procédé industriel.

La présente invention a pour objet l'utilisation, dans le domaine de la désacidification de gaz, de diamines tertiaires particulières, dont la chaîne principale, c'est-à-dire la chaîne reliant les deux fonctions amines tertiaires, est une chaine hydrocarbonée incluant une fonction éther, de type alcoxyalkyle, ladite chaine étant substituée par un groupement hydroxyle porté par un atome de carbone situé en position beta d'au moins un des atomes d'azote. On utilisera la désignation de diamines tertiaires béta-hydroxylées dans la présente invention en référence à la position d'un groupement hydroxyle par rapport à une fonction amine tel que décrit.

Les inventeurs ont mis en évidence que l'utilisation des diamines tertiaires béta-hydroxylées selon la formule générale (I) donnée plus bas permet d'obtenir de bonnes performances en terme de capacité cyclique d'absorption des gaz acides et de sélectivité d'absorption vis-à-vis de l'H₂S, notamment une sélectivité d'absorption vis-à-vis de l'H₂S plus importante que des amines de référence telles que la N-méthyldiéthanolamine (MDEA) pour une capacité cyclique d'absorption des gaz acides équivalente ou supérieure.

### Résumé de l'invention

L'invention porte, selon un premier aspect, sur une solution absorbante pour éliminer des composés acides contenus dans un effluent gazeux, comportant :
- de l'eau ;
- au moins un des deux composés azotés suivants appartenant à la famille des diamines tertiaires :
   o le 1-diméthylamino-3-(2-diméthylaminoéthoxy)-2-propanol de formule suivante: 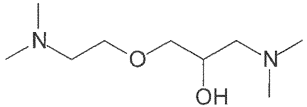
   o le 1,1'-oxybis[3-(diméthylamïno)-2-propanol] de formule suivante :

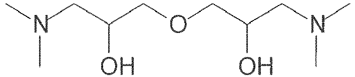

De préférence, la solution absorbante comporte entre 5 % et 95 % poids dudit composé azoté, de préférence entre 10 % et 90 % poids dudit composé azoté, et entre 5 % et 95 % poids d'eau, et de préférence entre 10 % et 90% poids d'eau.

La solution absorbante peut comporter en outre entre 5 % et 95 % poids d'au moins une amine supplémentaire, ladite amine supplémentaire étant soit une amine tertiaire, soit une amine secondaire comprenant deux carbones secondaires en alpha de l'atome d'azote ou au moins un carbone tertiaire en alpha de l'atome d'azote.

Ladite amine supplémentaire peut être une amine tertiaire choisie dans le groupe constitué par:
- la N-méthyldiéthanolamine ;
- la triéthanolamine ;
- la diéthylmonoéthanolamine ;
- la diméthylmonoéthanolamine ; et
- l'éthyldiéthanolamine.

La solution absorbante peut comporter, en outre, une quantité non nulle et inférieure à 30 % poids d'au moins une amine supplémentaire étant une amine primaire ou une amine secondaire.

Ladite amine supplémentaire primaire ou secondaire peut être choisie dans le groupe constitué par :
- la monoéthanolamine ;
- la diéthanolamine ;
- la N-butyléthanolamine ;
- l'aminoéthyléthanolamine ;
- le diglycolamine ;
- la pipérazine ;
- la 1-méthyl-pipérazine ;
- la 2-méthyl-pipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine ;
- la N,N,-diméthyl-1 ,6-hexanediamine ;
- la N,N'-diméthyl-1,6-hexanediamïne
- la N-méthyl-1,6-hexanediamine ; et
- la N,N',N'-triméthyl-1,6-hexanediamine.

La solution absorbante peut comporter en outre au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther, l' hexaéthylèneglycoldiméthyléther, l' heptaéthylèneglycoldiméthyléther, l' octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, et le tributylphosphate.

L'invention porte, selon un deuxième aspect, sur un procédé d'élimination des composés acides contenus dans un effluent gazeux dans lequel on effectue une étape d'absorption des composés acides par mise en contact de l'effluent gazeux avec une solution absorbante selon l'invention.

De préférence, l'étape d'absorption des composés acides est réalisée à une pression comprise entre 1 bar et 200 bar, et à une température comprise entre 20°C et 100°C.

De préférence, on obtient une solution absorbante chargée en composés acides après l'étape d'absorption, et on effectue au moins une étape de régénération de ladite solution absorbante chargée en composés acides à une pression comprise entre 1 bar et 10 bar et à une température comprise entre 100 °C et 180 °C.

L'effluent gazeux peut être choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.

Le procédé selon l'invention peut être mis en oeuvre pour éliminer sélectivement de l'H₂S par rapport au CO₂ d'un effluent gazeux comportant de l'H₂S et du CO₂, de préférence du gaz naturel.

D'autres objets et avantages de l'invention apparaîtront à la lecture de la description qui suit d'exemples de réalisations particuliers de l'invention, donnés à titre d'exemples non limitatifs, la description étant faite en référence à la figure annexée décrite ci-après.

### Brève description de la figure

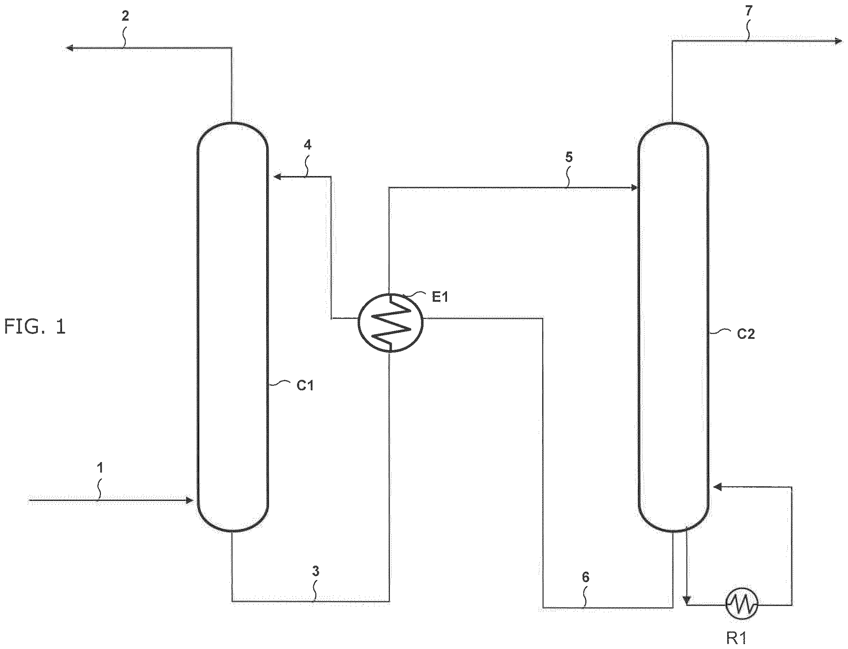

La figure 1 représente un schéma de principe de mise en oeuvre d'un procédé de traitement de gaz acides.

Dans les schémas de la présente description illustrant la préparation des composés azotés selon l'invention, les flèches représentent des étapes de réaction. Il s'agit de schémas réactionnels.

### Description détaillée de l'invention

La présente invention propose d'éliminer les composés acides d'un effluent gazeux en mettant en oeuvre en solution aqueuse dont la composition est détaillée ci-après.

### Composition de la solution absorbante

La solution absorbante mise en oeuvre pour l"élimination des composés acides contenus dans un effluent gazeux comporte:
- de l'eau;
- au moins un composé azoté appartenant à la famille des diamines tertiaires répondant à la formule (I) suivante : 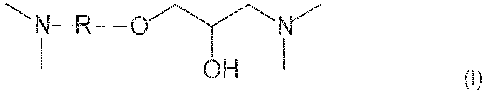
dans laquelle:
- R est choisi parmi l'un des deux groupements R1 et R2 suivants :
   R1 :

      -CH₂-CH₂-;
   R2:

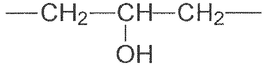

Dans la formule générale (I), le ou les groupements hydroxyles sont portés par des atomes de carbone situés en position beta des fonctions amines.

La solution absorbante peut comporter du 1-diméthylamino-3-(2-diméthylaminoéthoxy)-2-propanol lorsque R est égal à R1, ou du 1,1'-oxybis[3-(diméthylamino)-2-propanol] lorsque R est égal à R2, ou un mélange des deux composés.

La formule du 1-diméthylamino-3-(2-diméthylaminoéthoxy)-2-propanol est la suivante :

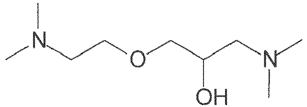

La formule du 1,1'-oxybis[3-(diméthylamino)-2-propanol] est la suivante :

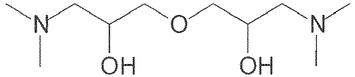

Par diamine tertiaire, on entend dans la présente description un composé chimique comportant deux fonctions amines qui sont des fonctions amines tertiaires.

Les amines selon la formule générale (I) peuvent être en concentration variable dans la solution absorbante, par exemple comprise entre 5 % et 95 % poids, de préférence entre 10 % et 90 % poids, encore plus préférentiellement entre 20 % et 60 % poids, et de manière très préférée entre 25 % et 50 % poids, bornes incluses.

La solution absorbante peut contenir entre 5 % et 95 % poids d'eau, de préférence entre 10 % et 90 % poids d'eau, plus préférentiellement entre 40 % et 80 % poids d'eau, et de manière très préférée de 50% à 75% d'eau, bornes incluses.

La somme des fractions massiques exprimées en % poids des différents composés de la solution absorbante est égale à 100 % en poids de la solution absorbante.

Selon un mode de réalisation, la solution absorbante peut contenir en outre au moins une amine supplémentaire qui est une amine tertiaire telle que la N-méthyldiéthanolamine, la triéthanolamine, la diéthylmonoéthanolamine, la diméthylmonoéthanolamine, ou l'éthyldiéthanolamine, ou qui est une amine secondaire ayant un encombrement stérique sévère, cet encombrement étant défini soit par la présence de deux carbones secondaires en alpha de l'azote, soit par au moins un carbone tertiaire en alpha de l'azote. On entend par ladite amine supplémentaire tout composé possédant au moins une fonction amine tertiaire ou secondaire sévèrement encombrée. La concentration de ladite amine supplémentaire tertiaire ou secondaire sévèrement encombrée dans la solution absorbante peut être comprise entre 5 % et 95 % poids, de préférence entre 5 % et 50 % poids, de manière très préférée entre 5 % et 30 % poids.

Selon un mode de réalisation, les amines selon la formule générale (I) peuvent être formulées avec un ou plusieurs composés contenant au moins une fonction amine primaire ou secondaire. Par exemple, la solution absorbante comporte jusqu'à une concentration de 30 % poids, de préférence inférieure à 15 % poids, de préférence inférieure à 10 % poids dudit composé contenant au moins une fonction amine primaire ou secondaire. De préférence, la solution absorbante comporte au moins 0,5 % poids dudit composé contenant au moins une fonction amine primaire ou secondaire. Ledit composé permet d'accélérer la cinétique d'absorption du CO₂ et, dans certains cas, du COS contenu dans le gaz à traiter.

Une liste non exhaustive de composés contenant au moins une fonction amine primaire ou secondaire qui peuvent entrer dans la formulation est donnée ci-dessous :
- la monoéthanolamine ;
- la diéthanolamine ;
- la N-butyléthanolamine ;
- l'amïnoéthyléthanolamine ;
- le diglycolamine ;
- la pipérazine ;
- la 1-méthylpipérazine ;
- la 2-méthylpipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine et tous ses dérivés diversement N-alkylés tels par exemple la N,N-diméthyl-1,6-hexanediamine, la N,N'-dïméthyl-1,6-hexanediamine, la N-méthyl-1,6-hexanediamine ou la N,N',N'-triméthyl-1,6-hexanediamine.

La solution absorbante comprenant au moins un composé selon l'invention peut comprendre un mélange d'amines supplémentaires tels que définies ci-dessus.

Selon un mode de réalisation, la solution absorbante peut contenir des composés organiques non réactifs vis à vis des composés acides (couramment nommé "solvants physiques"), qui permettent d'augmenter la solubilité d'au moins un ou plusieurs composés acides de l'effluent gazeux. Par exemple, la solution absorbante peut comporter entre 5% et 50% poids de solvant physique tel que des alcools, des éthers, des étheralcools, des éthers de glycol et de polyéthylèneglycol, des thioéthers de glycol, des esters et alkoxyesters de glycol et de polyéthylèneglycol, des esters de glycérol, des lactones, des lactames, des pyrrolidones N-alkylées,des dérivés de la morpholine, de la morpholin-3-one, des imidazoles et des imidazolidinones, des pipéridones N-alkylées, des cyclotétraméthylènesulfones, des N-alkylformamides, des N-alkylacétamides, des éthers-cétones des carbonates d'alkyles ou des phosphates d'alkyles et leur dérivés.

A titre d'exemple et de façon non limitative, il peut s'agir du méthanol, de l'éthanol, du 2-éthoxyéthanol, du triéthylèneglycoldiméthyléther, du tétraéthylèneglycoldiméthyléther, du pentaéthylèneglycoldiméthyléther, de l' hexaéthylèneglycoldiméthyléther, de l' heptaéthylèneglycoldiméthyléther, de l' octaéthylèneglycoldiméthyléther, du butoxyacétate de diéthylèneglycol, du triacétate de glycérol, du sulfolane, de la N-méthylpyrrolidone, de la N-méthylmorpholin-3-one, du N,N-diméthylformamide, de la N-formyl-morpholine, de la N,N-diméthyl-imidazolidin-2-one, du N-méthylimidazole, de l'éthylèneglycol, du diéthylèneglycol, du triéthylèneglycol, du thiodiglycol, du carbonate de propylène, du tributylphosphate..

### Synthèse des composés de formule générale (I) de la solution absorbante selon l'invention

### Synthèse du 1-diméthylamino-3-(2-diméthylaminoéthoxy)-2-propanol

Voie A : la synthèse du 1-diméthylamino-3-(2-diméthylaminoéthoxy)-2-propanol peut être réalisée selon une première voie (A) telle qu'illustrée par le schéma 1 ci-dessous. 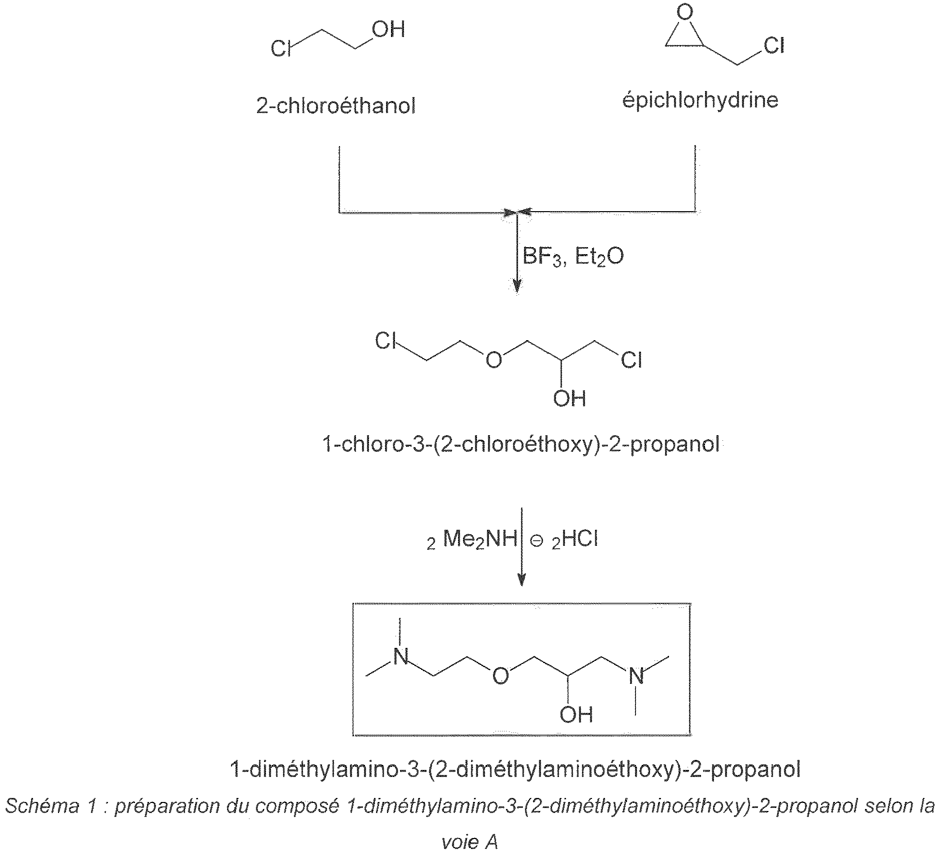
   Dans un premier temps, on réalise une réaction d'addition d'une molécule de 2-haloéthanol, en particulier de 2-chloroéthanol, sur une molécule d'épihalohydrine, plus particulièrement d'épichlorhydrine, pour conduire à un 1-halo-3-(2-haloéthoxy)-2-propanol, plus généralement au 1-chloro-3-(2-chloroéthoxy)-2-propanol. La sélectivité de cette réaction pour une monoaddition est favorisée en opérant avec un excès de 2-chloroéthanol. Cette réaction peut être catalysée par exemple par un acide de Lewis tel le trifluorure de bore qui peut être associé à du diéthyléther.
   Dans un second temps, une réaction de substitution d'une molécule de 1-chloro-3-(2-chloroéthoxy)-2-propanol avec 2 molécules de diméthylamine conduit au 1-diméthylamino-3-(2-diméthylaminoéthoxy)-2-propanol. Cette réaction est de préférence conduite avec un excès de diméthylamine. L'acide chlorhydrique formé lors de la condensation peut être neutralisé in situ au moyen d'une base présente pendant la réaction ou après la fin de celle-ci.
   La première réaction d'addition et la deuxième réaction de substitution sont conduites en deux étapes successives.
Voie B : la synthèse du 1-diméthylamino-3-(2-diméthylaminoéthoxy)-2-propanol peut être réalisée selon une deuxième voie (B) telle qu'illustrée par le schéma 2 ci-dessous.

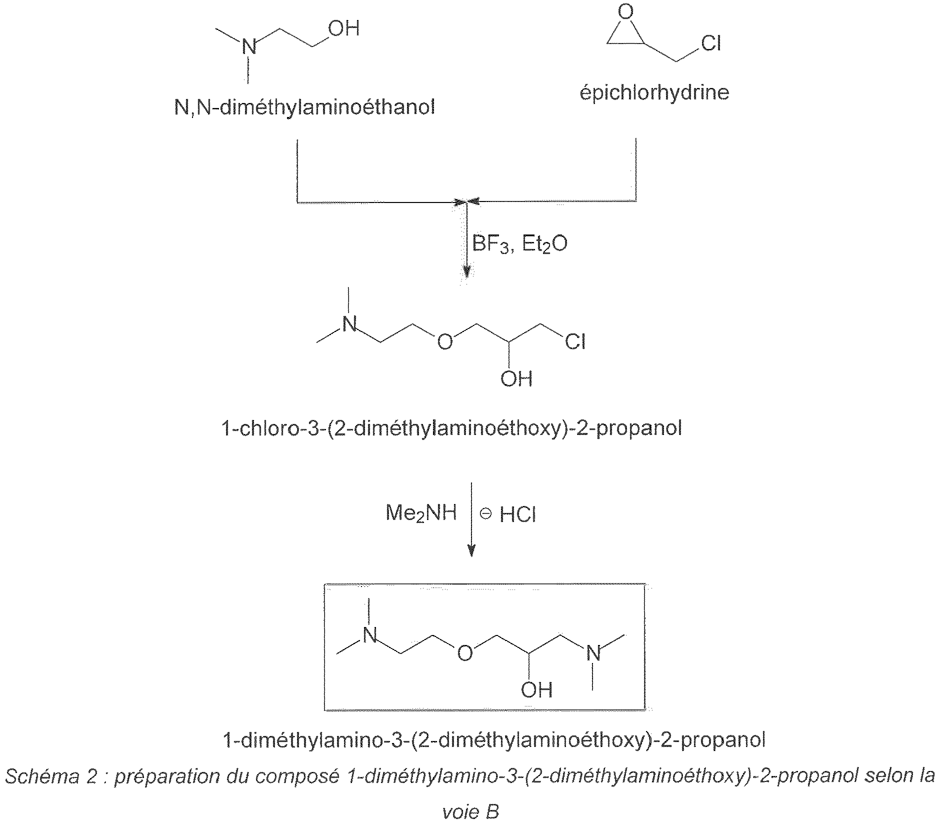

Selon cette deuxième voie B, on réalise, dans un premier temps, une réaction d'addition d'une molécule de 2-diméthylaminoéthanol sur une molécule d'épihalohydrine, en particulier d'épichlorhydrine, pour conduire à un 1-halo-3-(2-diméthylaminoéthoxy)-2-propanol, plus particulièrement au 1-chloro-3-(2-diméthylaminoéthoxy)-2-propanol. La sélectivité de cette réaction pour une monoaddition est favorisée en opérant avec un excès de 2-diméthylaminoéthanol. Cette réaction peut être catalysée par exemple par un acide de Lewis tel le trifluorure de bore qui peut être associé à du diéthyléther.

Dans un second temps, une réaction le substitution d'une molécule de 1-chloro-3-(2-diméthylaminoéthoxy)-2-propanol avec une molécule de diméthylamine conduit au 1-diméthylamino-3-(2-diméthylaminoéthoxy)-2-propanol. Cette réaction est de préférence conduite avec un excès de diméthylamine. L'acide chlorhydrique formé lors de la condensation pouvant être neutralisé in situ au moyen d'une base présente pendant la réaction ou après la fin de celle-ci.

La première réaction d'addition et la deuxième réaction de substitution sont conduites en deux étapes successives.

### Synthèse du 1,1'-oxybis[3-(diméthylamino)-2-propanol]

La synthèse du 1,1'-oxybis[3-(diméthylamino)-2-propanol] est illustrée par le schéma 3 ci-dessous.

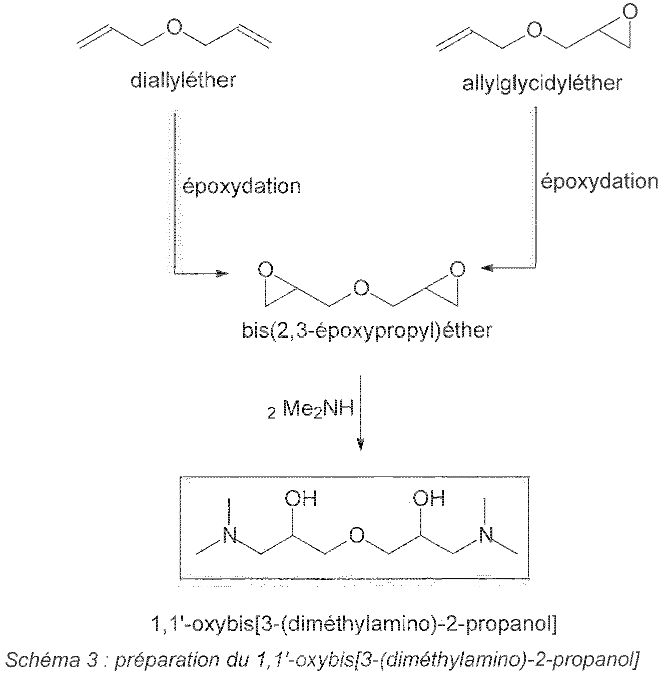

Dans un premier temps, on réalise soit une réaction d'époxydation de chacune des deux fonctions alcènes du diallyléther en fonctions oxiranes afin d'obtenir le bis(2,3-époxypropyl)éther, soit une réaction d'époxydation de la fonction alcène de l'allylglycidyléther en fonction oxirane afin d'obtenir le bis(2,3-époxypropyl)éther.

Cette réaction d'époxydation peut être réalisée avec tous les moyens connus de l'homme du métier pour réaliser l'époxydation d'une double liaison carbone-carbone. On peut par exemple utiliser un peroxyde, un hydroperoxyde, un peracide, tel que l'acide peracétique ou l'acide-3-chloroperbenzoique, ou un perester. On peut également utiliser la combinaison d'un acide tel l'acide acétique et un peroxyde tel le peroxyde d'hydrogène, permettant de générer in situ un peracide. La réaction peut s'effectuer dans des conditions douces, par exemple à une température proche de l'ambiante, et peut se faire en présence d'un solvant, qui peut être un solvant chloré tel que le dichlorométhane, ou un solvant hydrocarboné aliphatique ou aromatique. On peut également réaliser la réaction d'époxydation d'une insaturation au moyen d'oxygène et d'un système catalytique approprié.

Dans un second temps, la réaction d'addition de deux molécules de diméthylamine sur une molécule de bis(2,3-époxypropyl)éther pour conduire au 1,1'-oxybis[3-(diméthylamino)-2-propanol]. Cette réaction peut être conduite avec un excès de diméthylamine. C'est une réaction exothermique qui est réalisée de préférence avec un contrôle de température approprié. Par exemple, la température est maintenue dans la gamme -15°C /100°C.

De préférence, la première réaction d'époxydation et la deuxième réaction d'addition sont conduites en deux étapes successives.

### Nature des effluents gazeux

Les solutions absorbantes selon l'invention peuvent être mises en oeuvre pour désacidifier les effluents gazeux suivants : le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur. Ces effluents gazeux contiennent un ou plusieurs des composés acides suivants : le CO₂, l'H₂S, des mercaptans (par exemple le méthylmercaptan (CH₃SH), l'éthylmercaptan (CH₃CH₂SH), le propylmercaptan (CH₃CH₂CH₂SH)), le COS, le CS₂, le SO₂.

Les fumées de combustion sont produites notamment par la combustion d'hydrocarbures, de biogaz, de charbon dans une chaudière ou pour une turbine à gaz de combustion, par exemple dans le but de produire de l'électricité. A titre d'illustration, on peut mettre en oeuvre un procédé de désacidification selon l'invention pour absorber au moins 70 %, de préférence au moins 80 % voire au moins 90 % du CO₂ contenu dans les fumées de combustion. Ces fumées ont généralement une température comprise entre 20°C et 60°C, une pression comprise entre 1 et 5 bar et peuvent comporter entre 50 % et 80 % d'azote, entre 5 % et 40 % de dioxyde de carbone, entre 1 % et 20 % d'oxygène, et quelques impuretés comme des SOx et des NOx, s'ils n'ont pas été éliminés en amont du procédé de désacidification. En particulier, le procédé de désacidification selon l'invention est particulièrement bien adapté pour absorber le CO₂ contenu dans des fumées de combustion comportant une faible pression partielle de CO₂, par exemple une pression partielle de CO₂ inférieure à 200 mbar.

Le procédé de désacidification selon l'invention peut être mis en oeuvre pour désacidifier un gaz de synthèse. Le gaz de synthèse contient du monoxyde de carbone CO, de l'hydrogène H₂ (généralement dans un ratio H₂/CO égal à 2), de la vapeur d'eau (généralement à saturation à la température où le lavage est effectué) et du dioxyde de carbone CO₂ (de l'ordre de la dizaine de pourcents). La pression est généralement comprise entre 20 et 30 bar, mais peut atteindre jusqu'à 70 bar. Il peut contenir, en outre, des impuretés soufrées (H₂S, COS, etc.), azotées (NH₃, HCN) et halogénées.

Le procédé de désacidification selon l'invention peut être mis en oeuvre pour désacidifier un gaz naturel. Le gaz naturel est constitué majoritairement d'hydrocarbures gazeux, mais peut contenir plusieurs des composés acides suivants : le CO₂, l'H₂S, des mercaptans, du COS, du CS₂. La teneur de ces composés acides est très variable et peut aller jusqu'à 70 % en volume pour le CO₂ et jusqu'à 40 % en volume pour l'H₂S. La température du gaz naturel peut être comprise entre 20°C et 100°C. La pression du gaz naturel à traiter peut être comprise entre 10 et 200 bar. L'invention peut être mise en oeuvre pour atteindre des spécifications généralement imposées sur le gaz désacidifié, qui sont moins de 2 % de CO₂, voire moins de 50 ppm de CO₂ pour réaliser ensuite une liquéfaction du gaz naturel et moins de 4 ppm d'H₂S, et moins de 50 ppm, voire moins de 10 ppm, volume de soufre total.

### Procédé d'élimination des composés acides dans un effluent gazeux

La mise en oeuvre d'une solution aqueuse comportant un composé selon la formule générale (I) pour désacidifier un effluent gazeux est réalisée de façon schématique en effectuant une étape d'absorption suivie d'une étape de régénération, par exemple tel que représenté par la figure 1.

En référence à la figure 1, l'installation de désacidification d'un effluent gazeux selon l'invention comprend une colonne d'absorption C1 munie de moyens de mise en contact entre gaz et liquide, par exemple un garnissage vrac, un garnissage structuré ou des plateaux. L'effluent gazeux à traiter est acheminé par une conduite 1 débouchant au fond de la colonne C1. Une conduite 4 permet l'introduction de la solution absorbante en tête de la colonne C1. Une conduite 2 permet l'évacuation du gaz traité (désacidifié), et une conduite 3 permet d'acheminer la solution absorbante enrichie en composés acides suite à l'absorption vers une colonne de régénération C2. Cette colonne de régénération C2 est équipée d'internes de mise en contact entre gaz et liquide, par exemple des plateaux, des garnissages en vrac ou structurés. Le fond de la colonne C2 est équipée d'un rebouilleur R1 qui apporte la chaleur nécessaire à la régénération en vaporisant une fraction de la solution absorbante. La solution enrichie en composés acides est introduite en tête de la colonne de régénération C2 par une conduite 5. Une conduite 7 permet d'évacuer au sommet de la colonne C2 le gaz enrichi en composés acides libérés lors de la régénération, et une conduite 6 disposée au fond de la colonne C2 permet d'envoyer la solution absorbante régénérée vers la colonne d'absorption C1. Un échangeur de chaleur E1 permet de récupérer la chaleur de la solution absorbante régénérée issue de la colonne C2 pour chauffer la solution absorbante enrichie en composés acides sortant de la colonne d'absorption C1.

L'étape d'absorption consiste à mettre en contact l'effluent gazeux arrivant par la conduite 1 avec la solution absorbante arrivant par la conduite 4. Lors du contact, les fonctions amines des molécules selon la formule générale (I) de la solution absorbante réagissent avec les composés acides contenus dans l'effluent de manière à obtenir un effluent gazeux appauvri en composés acides qui est évacué par la conduite 2 en tête de la colonne C1 et une solution absorbante enrichie en composés acides évacuée par la conduite 3 en fond de la colonne C1 pour être régénérée.

L'étape d'absorption des composés acides peut être réalisée à une pression dans la colonne C1 comprise entre 1 bar et 200 bar, de préférence entre 20 bar et 100 bar pour le traitement d'un gaz naturel, de préférence entre 1 bar et 3 bar pour le traitement des fumées industrielles, et à une température dans la colonne C1 comprise entre 20°C et 100°C, préférentiellement comprise entre 30°C et 90°C, voire entre 30 et 60°C.

L'étape de régénération consiste notamment à chauffer et, éventuellement à détendre, la solution absorbante enrichie en composés acides afin de libérer les composés acides sous forme gazeuse. La solution absorbante enrichie en composés acides sortant de la colonne C1 est introduite dans l'échangeur de chaleur E1, où elle est réchauffée par le flux circulant dans la conduite 6 en provenance de la colonne de régénération C2. La solution réchauffée en sortie de E1 est introduite dans la colonne de régénération C2 par la conduite 5.

Dans la colonne de régénération C2, sous l'effet de la mise en contact de la solution absorbante arrivant par la conduite 5 avec la vapeur produite par le rebouilleur, les composés acides sont libérés sous forme gazeuse et évacués en tête de colonne C2 par la conduite 7. La solution absorbante régénérée, c'est-à-dire appauvrie en composés acides, est évacuée par la conduite 6 et est refroidie dans E1, puis recyclée dans la colonne d'absorption C1 par la conduite 4.

L'étape de régénération peut être réalisée par régénération thermique, éventuellement complétée par une ou plusieurs étapes de détente. Par exemple, la solution absorbante enrichie en composés acides évacuée par la conduite 3 peut être envoyée dans un premier ballon de détente (non représenté), avant son passage dans l'échangeur de chaleur E1. Dans le cas d'un gaz naturel, la détente permet d'obtenir un gaz évacué au sommet du ballon contenant la majeure partie des hydrocarbures aliphatiques co-absorbés par la solution absorbante. Ce gaz peut éventuellement être lavé par une fraction de la solution absorbante régénérée et le gaz ainsi obtenu peut être utilisé comme gaz combustible. Le ballon de détente opère de préférence à une pression inférieure à celle de la colonne d'absorption C1 et supérieure à celle de la colonne de régénération C2. Cette pression est généralement fixée par les conditions d'utilisation du gaz combustible, et est typiquement de l'ordre de 5 à 15 bar. Le ballon de détente opère à une température sensiblement identique à celle de la solution absorbante obtenue en fond de la colonne d'absorption C1.

La régénération peut être effectuée à une pression dans la colonne C2 comprise entre 1 bar et 5 bar, voire jusqu'à 10 bar et à une température dans la colonne C2 comprise entre 100°C et 180°C, de préférence comprise entre 110°C et 170°C, plus préférentiellement entre 120°C et 140°C. De manière préférée, la température de régénération dans la colonne C2 est comprise entre 155°C et 180°C dans le cas où l'on souhaite réinjecter les gaz acides. De manière préférée, la température de régénération dans la colonne C2 est comprise entre 115°C et 130°C dans les cas où le gaz acide est envoyé à l'atmosphère ou dans un procédé de traitement aval, comme un procédé Claus ou un procédé de traitement de gaz de queue.

### Exemples

Les exemples ci-dessous illustrent, de manière non limitative, la synthèse des composés selon la formule générale (I), ainsi que certaines des performances de ces composés lorsqu'ils sont utilisés en solution aqueuse pour éliminer des composés acides, comme le CO₂ ou l'H₂S, contenus dans un effluent gazeux par mise en contact de l'effluent gazeux avec la solution.

### Exemple 1 : synthèse des molécules selon l'invention.

Les exemples suivants décrivent la synthèse du 1-diméthylamino-3-(2-diméthylaminoéthoxy)-2-propanol et du 1,1'-oxybis[3-(dïméthylamino)-2-propanol], étant entendu que toutes les possibilités au niveau des modes opératoires possibles ne sont pas ici décrites.

### Synthèse du 1-diméthylamino-3-(2-diméthylaminoéthoxy)-2-propanol(selon la voie A)

Dans un réacteur on introduit 277,3 g (3,44 moles) de 2-chloroéthanol puis 1,2 g de trifluorure de bore sous sa forme éthérate de diéthyle, puis à une température maintenue à 60°C, on introduit en quatre heures 107 g (1,15 mole) d'épichlorhydrine. Après ajout d'une solution de 1,4 g de soude dans 5 ml d'eau, on procède à l'évaporation de l'excès de 2-chloroéthanol et après distillation sous pression réduite on isole 153,5 g d'un produit dont le spectre RMN-¹³C (CDCl₃), caractérisé par les données ci-dessous, est conforme à celui du 1-chloro-3-(2-chloroéthoxy)-2-propanol.
45,7 ppm : Cl-**C**H₂-CH₂-O-CH₂-CH(OH)-CH₂-Cl
71,5 ppm : Cl-CH₂-**C**H₂-O-CH₂-CH(OH)-CH₂-Cl
71,0 ppm : C-CH₂-CH₂-O-**C**H₂-CH(OH)-CH₂-Cl
69,7 ppm : Cl-CH₂-CH₂-O-CH₂-**C**H(OH)-CH₂-Cl
42,7 ppm : Cl-CH₂-CH₂-O-CH₂-CH(OH)-**C**H₂-Cl

Dans un réacteur autoclave, on porte à 70°C pendant sept heures un mélange de 184,0 g (1,06mole) de 1-chloro-3-(2-chloroéthoxy)-2-propanol et de 715 g d'une solution aqueuse de diméthylamine à 40 %. Après retour à la température ambiante, on introduit 85,0 g de soude et on maintient le milieu sous agitation pendant 30 minutes, puis on procède à l'élimination des fractions volatiles suivie d'une distillation sous pression réduite afin d'isoler 148,6 g d'un produit dont le spectre RMN-¹³C (CDCl₃), caractérisé par les données ci-dessous, est conforme à celui du 1-diméthylamino-3-(2-diméthylaminoéthoxy)-2-propanol.
44,9ppm : (**C**H₃)₂N-CH₂-CH₂-O-CH₂-**C**H(OH)-CH₂-N(CH₃)₂
58,0ppm : (**C**H₃)₂N-CH₂-CH₂-O-CH₂-CH(OH)-CH₂-N(CH₃)₂
73,6ppm : (**C**H₃)₂N-CH₂-CH₂-O-CH₂-CH(OH)-CH₂-N(CH₃)₂
68,4ppm : (**C**H₃)₂N-CH₂-CH₂-O-CH₂-CH(OH)-CH₂-N(CH₃)₂
66,7ppm : (**C**H₃)₂N-CH₂-CH₂-O-CH₂-CH(OH)-CH₂-N(CH₃)₂
61,9ppm : (**C**H₃)₂N-CH₂-CH₂-O-CH₂-CH(OH)-CH₂-N(CH₃)₂
45,2ppm : (**C**H₃)₂N-CH₂-CH₂-O-CH₂-CH(OH)-CH₂-N(CH₃)₂

### Synthèse du 1,1'-oxybis[3-(diméthylamino)-2-propanol]

A une solution de 69,7 g (0,61 mole) d'allylglycidyléther dans 1200 ml de dichlorométhane maintenue entre 0°C et 5°C, on introduit en quatre heures, par petites fractions, 154,0 g (0,89 mole) d'acide 3-chloroperbenzoique. Après retour à la température ambiante, on procède à la filtration du milieu. Le filtrat est lavé avec 350 ml d'une solution aqueuse de sulfite de sodium et de soude puis avec deux fois 250 ml d'eau. Après distillation, on obtient 57,0 g d'un produit dont le spectre RMN-¹³C (CDCl₃), caractérisé par les données ci-dessous, est conforme à celui du bis(2,3-époxypropyl)éther.
43,9 ppm : [**C**H₂(O)CH]-CH₂-O-CH₂-[CH(O)CH₂]
49,8 ppm : [CH₂(O)**C**H]-CH₂-O-CH₂-[CH(O)CH₂]
71,5 ppm : [CH₂(O)CH]-**C**H₂-O-CH₂-[CH(O)CH₂]
71,3 ppm : [CH₂(O)CH]-CH₂-O-**C**H₂-[CH(O)CH₂]
49,9 ppm : [CH₂(O)CH]-CH₂-O-CH₂-[**C**H(O)CH₂]
42,9 ppm : [CH₂(O)CH]-CH₂-O-CH₂-[CH(O)**C**H₂]

La synthèse précédente est reproduite afin d'obtenir une quantité supplémentaire de bis(2,3-époxypropyl)éther. Puis à 884 g d'une solution aqueuse de diméthylamine à 40 %, on introduit en deux heures, en maintenant la température à 5°C, 105,0 g (0,8 mole) de bis(2,3-époxypropyl)éther. Après retour à la température ambiante, l'excès de diméthylamine ainsi que l'eau sont éliminés. Après distillation sous pression réduite, on isole 144,0 g d'un produit dont le spectre RMN-¹³C (CDCl₃), caractérisé par les données ci-dessous, est conforme à celui du 1,1'-oxybis[3-(diméthylamino)-2-propanol].
45,2 ppm : (**C**H₃)₂N-CH₂-CH(OH)-CH₂-O-CH₂-CH(OH)-CH₂-N(CH₃)₂
61,8 ppm : (CH₃)₂N-**C**H₂-CH(OH)-CH₂-O-CH₂-CH(OH)-CH₂-N(CH₃)₂
66,7 ppm : (CH₃)₂N-CH₂-**C**H(OH)-CH₂-O-CH₂-CH(OH)-CH₂-N(CH₃)₂
73,7 ppm : (CH₃)₂N-CH₂-CH(OH)-CH₂-O-**C**H₂-CH(OH)-CH₂-N(CH₃)₂
73,7 ppm : (CH₃)₂N-CH₂-CH(OH)-CH₂-O-**C**H₂-CH(OH)-CH₂-N(CH₃)₂
66,7 ppm : (CH₃)₂N-CH₂-CH(OH)-CH₂-O-CH₂-**C**H(OH)-CH₂-N(CH₃)₂
61,8 ppm : (CH₃)_{Z}N-CH₂-CH(OH)-CH₂-O-CH₂-CH(OH)-**C**H₂-N(CH₃)₂
45,2 ppm : (CH₃)₂N-CH₂-CH(OH)-CH₂-O-CH₂-CH(OH)-CH₂-N(**C**H₃)₂

### Exemple 2 : Vitesse d'absorption du CO₂ d'une formulation d'amine pour un procédé d'absorption sélective.

On effectue des essais comparatifs d'absorption du CO₂ par différentes solutions absorbantes :
- une solution absorbante selon l'invention comprenant du 1-diméthylamino-3-(2-diméthylaminoéthoxy)-2-propanol à 47 % poids dans l'eau ;
- une solution absorbante selon l'invention comprenant du 1,1'-oxybis[3-(diméthylamino)-2-propanol] à 48 % poids dans l'eau ;
- une solution aqueuse de N-méthyldiéthanolamine (MDEA) à 47 % en poids de MDEA, qui constitue une solution absorbante de référence pour une élimination sélective en traitement de gaz ;
- une solution aqueuse de 1,2-bis-(pyrrolidinyléthoxy)-éthane à 50 % en poids de 1,2-bis-(pyrrolidinyléthoxy)-éthane, qui est un diaminoéther avec deux fonctions amines tertiaires selon la formule générale du brevet US 4,405,582, mais qui ne possède pas de fonction alcool et qui n'entre pas dans la formule générale (I) selon l'invention ;
- une solution aqueuse de 1,2-bis-(tertiobutylaminoéthoxy)-éthane à 40 % en poids de 1,2-bis-(tertiobutylaminoéthoxy)-éthane, qui est un diaminoéther avec deux fonctions secondaires ayant un encombrement stérique sévère des atomes d'azote selon la formule générale du brevet US 4,405,583, sans fonction alcool et qui n'entre pas dans la formule générale (I) selon l'invention ;
- une solution aqueuse de N,N,N',N'-tétraméthyl-1,6-hexanediamine (TMHDA) à 50 % en poids de TMHDA, qui est une diamine tertiaire divulguée dans le brevet FR2934172, mais qui ne possède pas de fonction alcool et qui n'entre pas dans la formule générale (I) selon l'invention.

Pour chaque essai, on mesure le flux d'absorption du CO₂ par la solution absorbante aqueuse dans un réacteur fermé, du type cellule de Lewis. 200 g de solution est introduite dans le réacteur fermé, régulé à une température de 50°C. On réalise quatre injections successives de CO₂ de 100 à 200 mbar dans la phase vapeur du réacteur ayant un volume de 200 cm³. La phase gaz et la phase liquide sont agitées à 100 tours/minutes et entièrement caractérisées du point de vue hydrodynamique. Pour chaque injection, on mesure la vitesse d'absorption du CO₂ par variation de pression dans la phase gaz. On détermine ainsi un coefficient de transfert global Kg par une moyenne des résultats obtenus sur les quatre injections.

Les résultats obtenus sont présentés dans le tableau 1 ci-dessous en vitesse d'absorption relative par rapport à la solution absorbante aqueuse de référence comprenant 47 % poids de MDEA, cette vitesse d'absorption relative étant définie par le rapport du coefficient de transfert global de la solution absorbante testée sur le coefficient de transfert global de la solution absorbante de référence (avec MDEA).

**Tableau 1**

| Composé | Concentration (% en poids) | Vitesse d'absorption relative du CO₂ à 50°C |
|---|---|---|
| MDEA | 47 | 1,00 |
| 1,2-bis-(pyrrolidinyléthoxy)-éthane (selon le brevet US 4,405,582) | 50 | 1,43 |
| 1,2-bis-(tertiobutylaminoéthoxy)-éthane (selon le brevet US 4,405,583) | 40 | 1,74 |
| TMHDA (selon FR2934172) | 50 | 2,72 |
| 1-diméthylamino-3-(2-diméthylaminoéthoxy)-2-propanol | 47 | 0,98 |
| 1,1'-oxybis[3-(diméthylamino)-2-propanol] | 48 | 0,74 |

L'examen des résultats fait ressortir, dans ces conditions de test, une vitesse d'absorption du CO₂ par les solutions absorbantes selon l'invention plus lente par rapport à la formulation de référence avec la MDEA, et par rapport aux solutions absorbantes avec certaines molécules de l'art antérieur. Il apparaît donc que les composés selon l'invention présentent étonnamment un intérêt particulier et amélioré dans le cas d'une désacidification sélective d'un effluent gazeux dans laquelle on cherche à limiter la cinétique d'absorption du CO₂.

### Exemple 3 : Capacité d'absoription de l'H₂S d'une formulation d'amine pour un procédé d'absorption sélective.

Les performances de capacité d'absorption de l'H₂S à 40 °C d'une solution aqueuse de 1-diméthylamino-3-(2-diméthylaminoéthoxy)-2-propanol selon l'invention, contenant 47 % en poids de 1-diméthylamino-3-(2-diméthylaminoéthoxy)-2-propanol sont comparées à celles d'une solution aqueuse de MDEA contenant 50 % en poids de MDEA, qui constitue une solution absorbante de référence pour une élimination sélective en traitement de gaz.

On réalise un test d'absorption à 40 °C sur des solutions aqueuses d'amine au sein d'une cellule d'équilibre thermostatée. Ce test consiste à injecter dans la cellule d'équilibre, préalablement remplie de solution aqueuse d'amine dégazée, une quantité connue de gaz acide, de l' H₂S dans cet exemple, puis à attendre l'établissement de l'état d'équilibre. Les quantités de gaz acide absorbées dans la solution aqueuse d'amine sont alors déduites des mesures de température et de pression grâce à des bilans de matière et de volume. Les solubilités sont représentées de manière classique sous la forme des pressions partielles en H₂S (en bar) en fonction du taux de charge en H₂S (en mol d'H₂S/kg de solution absorbante et en mol d'H₂S/mol d'amine).

Dans le cas d'une désacidification sélective en traitement de gaz naturel, les pressions partielles en H₂S rencontrées dans les gaz acides sont typiquement comprises entre 0,05 et 0,15 bar, à une température de 40°C. A titre d'exemple, dans cette gamme industrielle, on compare dans le tableau 2 ci-dessous les taux de charge d'H₂S obtenus à 40°C pour différentes pressions partielles en H₂S entre la solution absorbante de MDEA à 50 % poids et la solution absorbante de 1-diméthylamino-3-(2-diméthylaminoéthoxy)-2-propanol à 47 % poids.

**Tableau 2**

| | Solution aqueuse de 1-diméthylamino-3-(2-diméthylaminoéthoxy)-2-propanol à 47 % poids à 40 °C | | Solution aqueuse de MDEA à 50 % poids à 40 °C | |
|---|---|---|---|---|
| Pression partielle en H₂S(bar) | Taux de charge en H₂S (mol/mol d'amine) | Taux de charge en H₂S (mol/kg) | Taux de charge en H₂S (mol/mol d'amine) | Taux de charge en H₂S (mol/kg) |
| 0,05 | 0,36 | 0,89 | 0,15 | 0,64 |
| 0,10 | 0,62 | 1,55 | 0,21 | 0,88 |
| 0,15 | 0,79 | 1,97 | 0,26 | 1,07 |

A 40 °C, quelle que soit la pression partielle en H₂S, la capacité d'absorption de la solution aqueuses de 1-diméthylamino-3-(2-diméthylaminoéthoxy)-2-propanol selon l'invention est supérieure à celle de la solution de MDEA. En effet, à une pression partielle de 0,05 bar, le taux de charge en H₂S est de 0,89 mol/kg dans la solution absorbante 1-diméthylamino-3-(2-diméthylaminoéthoxy)-2-propanol et de 0,64 mol/kg dans la solution absorbante de MDEA de référence. A une pression partielle en H₂S de 0,10 bar, l'écart entre les taux de charge en H₂S des deux solutions absorbantes s'élève à 0,67 mol/kg avec une capacité d'absorption pour la solution absorbante 1-diméthylamino-3-(2-diméthylaminoéthoxy)-2-propanol augmentée de 76 % par rapport à la solution absorbante de MDEA de référence. A une pression partielle en H₂S de 0,15 bar, l'écart de taux de charge en H₂S entre les deux solutions absorbantes atteint 84 % en faveur de la solution absorbante de 1-diméthylamino-3-(2-diméthylaminoéthoxy)-2-propanol. On constate donc que la solution aqueuse de 1-diméthylamino-3-(2-diméthylaminoéthoxy)-2-propanol à 47 % poids a une capacité d'absorption de l'H₂S plus élevée que la solution aqueuse de MDEA de référence à 50 % poids de MDEA à 40°C, dans la gamme de pressions partielles en H₂S comprise entre 0,05 et 0,15 bar correspondant à une gamme de pression partielle représentative des conditions industrielles usuelles.

L'absorption du CO₂ étant plus lente dans une solution aqueuse de 1-diméthylamino-3-(2-diméthylaminoéthoxy)-2-propanol que dans une solution aqueuse de MDEA (voir exemple 2 ci-dessus) et la capacité d'absorption équivalente ou supérieure en gaz acides, notamment en H₂S, de la solution absorbante de 1-diméthylamino-3-(2-diméthylaminoéthoxy)-2-propanol par rapport à une solution aqueuse de MDEA comme illustré dans le présent exemple, il apparaît que cette molécule exemplifiée selon l'invention permet de réduire les débits de solution absorbante à mettre en oeuvre sur des applications de désacidification sélective (H₂S/CO₂) pour absorber un débit donné de H₂S tout en réduisant le débit de CO₂ co-absorbé par rapport à la solution absorbante de MDEA de référence.

### Exemple 4 : Rapacité d'absorption du CO₂ de formulations d'amines pour un procédé de traitement de gaz acide.

Les performances de capacité d'absorption du CO₂ à 80 °C d'une solution aqueuse de 1-diméthylamino-3-(2-diméthylaminoéthoxy)-2-propanol selon l'invention, contenant 47 % en poids de 1-diméthylamino-3-(2-diméthylaminoéthoxy)-2-propanol et d'une solution aqueuse de 1,1'-oxybis[3-(diméthylamino)-2-propanol] contenant 50% en poids de 1,1'-oxybis[3-(diméthylamino)-2-propanol] sont comparées à celles d'une solution aqueuse de MDEA contenant 47 % en poids de MDEA, qui constitue une solution absorbante de référence pour la désacidification de gaz contenant du CO₂.

On réalise un test d'absorption à 80 °C selon le mode opératoire décrit dans l'exemple précédent, le gaz acide étant du CO₂ au lieu de l'H₂S.

Dans le cas d'une désacidification en traitement de gaz naturel, les pressions partielles en CO₂ rencontrées dans les gaz acides sont typiquement comprises entre 1 et 3 bar, gaz introduits en fond d'une colonne d'absorption où la solution peut atteindre une température de 80°C. A titre d'exemple, dans cette gamme industrielle, on compare dans le tableau 3 ci-dessous les taux de charge en CO₂ obtenus à 80°C pour différentes pressions partielles en CO₂ entre la solution absorbante de MDEA à 47 % poids et les solutions absorbantes de 1-diméthylamino-3-(2-diméthylaminoéthoxy)-2-propanol à 47 % poids et de 1,1'-oxybis[3-(diméthylamino)-2-propanol] à 50%poids.

**Tableau 3**

| | Taux de charge à 80°C (mole CO₂/kg solvant | |
|---|---|---|
| | P_{PCO2} = 1 bar | P_{PCO2} = 3 bar |
| Solution aqueuse de MDEA à 47 % poids | 0,83 | 1,73 |
| Solution aqueuse de 1-diméthylamino-3-(2-diméthylaminoéthoxy)-2-propanol à 47 %poids | 1,06 | 2,37 |
| Solution aqueuse de 1,1'-oxybis[3-(diméthylamino)-2-propanol] à 50%poids | 1,00 | 2,21 |

A 80 °C, quelle que soit la pression partielle en CO₂, la capacité d'absorption de la solution aqueuse de 1-diméthylamino-3-(2-diméthylaminoéthoxy)-2-propanol selon l'invention est supérieure à celle de la solution de MDEA. A une pression partielle en CO₂ de 1 bar, l'écart entre les taux de charge en CO₂ des deux solutions absorbantes s'élève à 0,23 mol/kg avec une capacité d'absorption pour la solution absorbante de 1-diméthylamino-3-(2-diméthylaminoéthoxy)-2-propanol augmentée de 28% par rapport à la solution absorbante de MDEA de référence. A une pression partielle en CO₂ de 3 bar, l'augmentation de taux de charge en CO₂ pour la solution absorbante de diméthylamino-3-(2-diméthylaminoéthoxy)-2-propanol est encore de 37% par rapport à la solution absorbante de MDEA de référence. On constate donc que la solution aqueuse de diméthylamino-3-(2-diméthylaminoéthoxy)-2-propanol à 47 % poids a une capacité d'absorption du CO₂ plus élevée que la solution aqueuse de MDEA de référence à 47 % poids de MDEA à 80°C, dans la gamme de pressions partielles en CO₂ comprise entre 1 et 3 bar correspondant à une gamme de pression partielle représentative des conditions industrielles usuelles.

A 80 °C, quelle que soit la pression partielle en CO₂, la capacité d'absorption de la solution aqueuse de 1,1'-oxybis[3-(diméthylamino)-2-propanol] selon l'invention est également supérieure à celle de la solution de MDEA. A une pression partielle en CO₂ de 1 bar, l'écart entre les taux de charge en CO₂ des deux solutions absorbantes s'élève à 0,17 mol/kg avec une capacité d'absorption pour la solution absorbante de 1,1'-oxybis[3-(diméthylamino)-2-propanol] augmentée de 20% par rapport à la solution absorbante de MDEA de référence. A une pression partielle en CO₂ de 3 bar, l'augmentation de taux de charge en CO₂ pour la solution absorbante de 1,1'-oxybis[3-(diméthylamino)-2-propanol] est encore de 28% par rapport à la solution absorbante de MDEA de référence. On constate donc que la solution aqueuse de 1,1'-oxybis[3-(diméthylamino)-2-propanol] à 50 % poids a une capacité d'absorption du CO₂ plus élevée que la solution aqueuse de MDEA de référence à 47 % poids de MDEA à 80°C, dans la gamme de pressions partielles en CO₂ comprise entre 1 et 3 bar correspondant à une gamme de pression partielle représentative des conditions industrielles usuelles.

Il apparaît donc que les molécules selon l'invention permet de réduire les débits de solution absorbante à mettre en oeuvre sur des applications de désacidification de gaz contenant du CO₂ par rapport à la solution absorbante de MDEA de référence.

## Revendications

1. Solution absorbante pour éliminer des composés acides contenus dans un effluent gazeux, comportant :
- de l'eau ;
- au moins un des deux composés azotés suivants appartenant à la famille des diamines tertiaires :
∘ le 1-diméthylamino-3-(2-diméthylaminoéthoxy)-2-propanol de formule suivante : 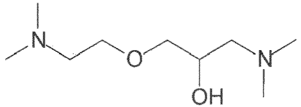
∘ le 1,1'-oxybis[3-(diméthylamino)-2-propanol] de formule suivante :

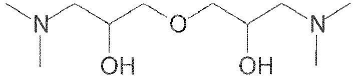

2. Solution absorbante selon la revendication 1, comportant entre 5 % et 95 % poids dudit composé azoté, de préférence entre 10 % et 90 % poids dudit composé azoté, et entre 5 % et 95 % poids d'eau, et de préférence entre 10 % et 90% poids d'eau.

3. Solution absorbante selon l'une des revendications précédentes, comportant en outre entre 5 % et 95 % poids d'au moins une amine supplémentaire, ladite amine supplémentaire étant soit une amine tertiaire, soit une amine secondaire comprenant deux carbones secondaires en alpha de l'atome d'azote ou au moins un carbone tertiaire en alpha de l'atome d'azote.

4. Solution absorbante selon la revendication 3, dans laquelle ladite amine supplémentaire est une amine tertiaire choisie dans le groupe constitué par :
- la N-méthyldiéthanolamine ;
- la triéthanolamine ;
- la diéthylmonoéthanolamine ;
- la diméthylmonoéthanolamine ; et
- l'éthyldiéthanolamine.

5. Solution absorbante selon l'une des revendications précédentes, comportant en outre une quantité non nulle et inférieure à 30 % poids d'au moins une amine supplémentaire étant une amine primaire ou une amine secondaire.

6. Solution absorbante selon la revendication 5, dans laquelle ladite amine supplémentaire primaire ou secondaire est choisie dans le groupe constitué par :
- la monoéthanolamine ;
- la diéthanolamine ;
- la N-butyléthanolamine ;
- l'aminoéthyléthanolamine ;
- le diglycolamine ;
- la pipérazine ;
- la 1-méthyl-pipérazine ;
- la 2-méthyl-pipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine ;
- la N,N,-diméthyl-1,6-hexanediamine ;
- la N,N'-diméthyl-1,6-hexanediamine
- la N-méthyl-1,6-hexanediamine ; et
- la N,N',N'-triméthyl-1,6-hexanediamine.

7. Solution absorbante selon l'une des revendications précédentes, comportant en outre au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l' octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-d'iméthyl-imidazolidin-2-one, le N-méthylimidazole, l'éthylèneglycol, le diéthylèneglycol, le triéthylèneglycol, le thiodiglycol, et le tributylphosphate.

8. Procédé d'élimination des composés acides contenus dans un effluent gazeux dans lequel on effectue une étape d'absorption des composés acides par mise en contact de l'effluent gazeux avec une solution absorbante selon l'une des revendications 1 à 7.

9. Procédé selon la revendication 8, dans lequel l'étape d'absorption des composés acides est réalisée à une pression comprise entre 1 bar et 200 bar, et à une température comprise entre 20°C et 100°C.

10. Procédé selon l'une des revendications 8 et 9, dans lequel on obtient une solution absorbante chargée en composés acides après l'étape d'absorption, et on effectue au moins une étape de régénération de ladite solution absorbante chargée en composés acides à une pression comprise entre 1 bar et 10 bar et à une température comprise entre 100 °C et 180 °C.

11. Procédé selon l'une des revendications 8 à 10, dans lequel l'effluent gazeux est choisi parmi le gaz naturel, les gaz de synthèse, les fumées de combustion, les gaz de raffinerie, les gaz acides issus d'une unité aux amines, les gaz issus d'une unité de réduction en queue du procédé Claus, les gaz de fermentation de biomasse, les gaz de cimenterie, les fumées d'incinérateur.

12. Procédé selon l'une des revendications 8 à 11, mis en oeuvre pour l'élimination sélective de l'H₂S par rapport au CO₂ d'un effluent gazeux comportant de l'H₂S et du CO₂, de préférence du gaz naturel.

## Patentansprüche

1. Absorbierende Lösung zum Entfernen von sauren Verbindungen, die in einem gasförmigen Abstrom enthalten sind, umfassend:
- Wasser;
- mindestens eine der beiden folgenden Stickstoffverbindungen, die zur Familie der tertiären Diamine gehören:
∘ 1-Dimethylamino-3-(2-dimethylaminoethoxy)-2-propanol mit der folgenden Formel: 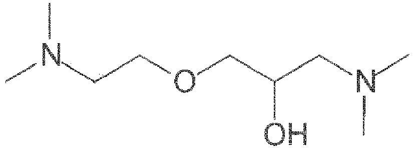
∘ 1,1'-Oxybis[3-(dimethylamino)-2-propanol] mit der folgenden Formel:

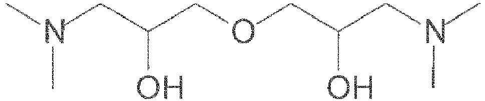

2. Absorbierende Lösung nach Anspruch 1, umfassend zwischen 5 Gew.-% und 95 Gew.-% der Stickstoffverbindung, vorzugsweise zwischen 10 Gew.-% und 90 Gew.-% der Stickstoffverbindung und zwischen 5 Gew.-% und 95 Gew.-% Wasser und vorzugsweise zwischen 10 Gew.-% und 90 Gew.-% Wasser.

3. Absorbierende Lösung nach einem der vorhergehenden Ansprüche, ferner umfassend zwischen 5 Gew.-% und 95 Gew.-% mindestens eines zusätzlichen Amins, wobei das zusätzliche Amin entweder ein tertiäres Amin oder ein sekundäres Amin ist, umfassend zwei sekundäre Kohlenstoffe an der alpha-Position des Stickstoffatoms oder mindestens einen tertiären Kohlenstoff an der alpha-Position des Stickstoffatoms.

4. Absorbierende Lösung nach Anspruch 3, wobei das zusätzliche Amin ein tertiäres Amin ist, ausgewählt aus der Gruppe bestehend aus:
- N-Methyldiethanolamin;
- Triethanolamin;
- Diethylmonoethanolamin;
- Dimethylmonoethanolamin; und
- Ethyldiethanolamin.

5. Absorbierende Lösung nach einem der vorhergehenden Ansprüche, ferner umfassend eine Menge ungleich null und kleiner 30 Gew.-%. mindestens eines zusätzlichen Amins, wobei es sich um ein primäres Amin oder ein sekundäres Amin handelt.

6. Absorbierende Lösung nach Anspruch 5, wobei das zusätzliche primäre oder sekundäre Amin ausgewählt ist aus der Gruppe bestehend aus:
- Monoethanolamin;
- Diethanolamin;
- N-Butylethanolamin;
- Aminoethylethanolamin;
- Diglycolamin;
- Piperazin;
- 1-Methylpiperazin;
- 2-Methylpiperazin;
- Homopiperazin;
- N-(2-Hydroxyethyl)piperazin;
- N-(2-Aminoethyl)piperazin;
- Morpholin;
- 3-(Methylamino)propylamin;
- 1,6-Hexandiamin;
- N,N-Dimethyl-1,6-hexandiamin;
- N,N'-Dimethyl-1,6-hexandiamin
- N-Methyl-1,6-hexandiamin; und
- N,N',N'-Trimethyl-1,6-hexandiamin.

7. Absorbierende Lösung nach einem der vorhergehenden Ansprüche, ferner umfassend mindestens ein physikalisches Lösemittel, ausgewählt aus der Gruppe bestehend aus Methanol, Ethanol, 2-Ethoxyethanol, Triethylenglycoldimethylether, Tetraethylenglycoldimethylether, Pentaethylenglycoldimethylether, Hexaethylenglycoldimethylether, Heptaethylenglycoldimethylether, Octaethylenglycoldimethylether, Diethylenglycolbutoxyacetat, Glyceroltriacetat, Sulfolan, N-Methylpyrrolidon, N-Methylmorpholin-3-on, N,N-Dimethylformamid, N-Formylmorpholin, N,N-Dimethylimidazolidin-2-on, N-Methylimidazol, Ethylenglycol, Diethylenglycol, Triethylenglycol, Thiodiglycol und Tributylphosphat.

8. Verfahren zum Entfernen von sauren Verbindungen, die in einem gasförmigen Abstrom enthalten sind, wobei ein Schritt zum Absorbieren der sauren Verbindungen durch Inkontaktbringen des gasförmigen Abstroms mit einer Absorptionslösung nach einem der Ansprüche 1 bis 7 durchgeführt wird.

9. Verfahren nach Anspruch 8, wobei der Schritt zum Absorbieren der sauren Verbindungen bei einem Druck im Bereich zwischen 1 bar und 200 bar, und bei einer Temperatur im Bereich zwischen 20 C und 100 °C durchgeführt wird.

10. Verfahren nach einem der Ansprüche 8 und 9, wobei eine absorbierende Lösung erhalten wird, die nach dem Schritt zum Absorbieren mit sauren Verbindungen beladen ist, und mindestens ein Schritt zum Regenerieren der mit sauren Verbindungen beladenen absorbierenden Lösung bei einem Druck im Bereich zwischen 1 bar und 10 bar und bei einer Temperatur im Bereich zwischen 100 °C und 180 °C durchgeführt wird.

11. Verfahren nach einem der Ansprüche 8 bis 10, wobei der gasförmige Abstrom ausgewählt ist aus Erdgas, Synthesegasen, Verbrennungsgasen, Raffineriegasen, sauren Gasen aus einer Amineinheit, Gasen aus einer Reduktionseinheit am Ende des Claus-Verfahrens, Biomasse-Gärungsgasen, Gasen aus Zementanlagen, Rauchgasen aus Verbrennungsanlagen.

12. Verfahren nach einem der Ansprüche 8 bis 11, das zum selektiven Entfernen des H₂S in Bezug auf CO₂ eines gasförmigen Abstroms, umfassend H₂S und CO₂, vorzugsweise Erdgas, durchgeführt wird.

## Claims

1. An absorbent solution for removing acid compounds contained in a gaseous effluent, comprising:
- water;
- at least one of the following two nitrogen compounds belonging to the family of tertiary diamines:
∘ 1-dimethylamino-3-(2-dimethylaminoethoxy)-2-propanol of formula as follows: 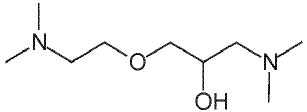
∘ 1,1'-oxybis[3-(dimethylamino)-2-propanol] of formula as follows:

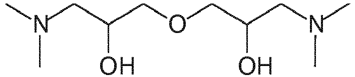

2. An absorbent solution as claimed in claim 1, comprising between 5 wt.% and 95 wt.% of said nitrogen compound, preferably between 10 wt.% and 90 wt.% of said nitrogen compound, and between 5 wt.% and 95 wt.% of water, preferably between 10 wt.% and 90 wt.% of water.

3. An absorbent solution as claimed in any one of the previous claims, furthermore comprising between 5 wt.% and 95 wt.% of at least one additional amine, said additional amine being either a tertiary amine or a secondary amine having two secondary carbons at nitrogen alpha position or at least one tertiary carbon at nitrogen alpha position.

4. An absorbent solution as claimed in claim 3, wherein said additional amine is a tertiary amine selected among the group made up of:
- N-methyldiethanolamine,
- triethanolamine,
- diethylmonoethanolamine,
- dimethylmonoethanolamine, and
- ethyldiethanolamine.

5. An absorbent solution as claimed in any one of the previous claims, furthermore comprising a non-zero amount less than 30 wt.% of at least one additional amine such as a primary amine or a secondary amine.

6. An absorbent solution as claimed in claim 5, wherein said additional primary or secondary amine is selected among the group made up of:
- monoethanolamine,
- diethanolamine,
- N-butylethanolamine,
- aminoethylethanolamine,
- diglycolamine,
- piperazine,
- 1-methylpiperazine,
- 2-methylpiperazine,
- homopiperazine,
- N-(2-hydroxyethyl)piperazine,
- N-(2-aminoethyl)piperazine,
- morpholine,
- 3-(methylamino)propylamine,
- 1,6-hexanediamine,
- N,N-dimethyl-1,6-hexanediamine,
- N,N'-dimethyl-1,6-hexanediamine,
- N-methyl-1,6-hexane-diamine, and
- N,N',N'-trimethyl-1,6-hexanediamine.

7. An absorbent solution as claimed in any one of the previous claims, furthermore comprising at least one physical solvent selected from among the group made up of methanol, ethanol, 2-ethoxyethanol, triethylene glycoldimethylether, tetraethylene glycoldimethylether, pentaethylene glycoldimethylether, hexaethylene glycol-dimethylether, heptaethylene glycoldimethylether, octaethylene glycoldimethylether, diethylene glycol butoxyacetate, glycerol triacetate, sulfolane, N-methylpyrrolidone, N-methylmorpholin-3-one, N,N-dimethylformamide, N-formyl-morpholine, N,N-dimethyl-imidazolidin-2-one, N-methylimidazole, ethylene glycol, diethylene glycol, triethylene glycol, thiodiglycol and tributyl phosphate.

8. A method of removing acid compounds contained in a gaseous effluent, wherein an acid compound absorption stage is carried out by contacting the gaseous effluent with an absorbent solution as claimed in any one of claims 1 to 7.

9. A method as claimed in claim 8, wherein the acid compound absorption stage is carried out at a pressure ranging between 1 bar and 200 bar, and at a temperature ranging between 20°C and 100°C.

10. A method as claimed in any one of claims 8 and 9, wherein an acid compound-laden absorbent solution is obtained after the absorption stage and at least one stage of regenerating said acid compound-laden absorbent solution is carried out at a pressure ranging between 1 bar and 10 bar, and at a temperature ranging between 100°C and 180°C.

11. A method as claimed in any one of claims 8 to 10, wherein the gaseous effluent is selected from among natural gas, syngases, combustion fumes, refinery gas, acid gas from an amine plant, Claus tail gas, biomass fermentation gas, cement plant gas and incinerator fumes.

12. A method as claimed in any one of claims 8 to 11, implemented for selectively removing the H₂S over the CO₂ from a gaseous effluent comprising H₂S and CO₂, preferably natural gas.
